# EUROPÄISCHE PATENTSCHRIFT

(11) **EP 2 419 251 B1**
(45) Veröffentlichungstag und Bekanntmachung des Hinweises auf die Patenterteilung: **13.02.2013**
(21) Anmeldenummer: 10715788.5
(22) Anmeldetag: 16.04.2010
(51) Int. Cl.: B28D 1/22, C03B 33/10

(54) **STRUKTURIERTES SCHNEIDRAD UND VERFAHREN ZU DESSEN HERSTELLUNG**
STRUCTURED CUTTING WHEEL AND METHOD FOR THE PRODUCTION THEREOF
ROUE COUPANTE STRUCTURÉE ET SON PROCÉDÉ DE FABRICATION

(30) Priorität: 16.04.2009 DE 102009017316
(43) Veröffentlichungstag der Anmeldung: 22.02.2012
(73) Patentinhaber: Bohle AG, 42781 Haan (DE)
(72) Erfinder: OSTENDARP, Heinrich, 42781 Haan (DE); PETERS, Nathalie, 42699 Solingen (DE)
(74) Vertreter: Cohausz & Florack
(86) Internationale Anmeldenummer: PCT/EP2010/055029
(87) Internationale Veröffentlichungsnummer: WO 2010/119118

(56) Entgegenhaltungen:
- WO-A1-2008/087612
- WO-A1-2009/036742
- WO-A1-2009/036743
- JP-A- 2006 104 029

## Beschreibung

Die Erfindung betrifft ein Schneidrad zum Schneiden spröder Materialien, beispielsweise Keramik und/oder Glas, mit einer entlang des Umfangs verlaufenden Schneidkante, wobei die Schneidkante eine Struktur in Form von radial vorstehenden Abschnitten und radial zurückstehenden Abschnitten aufweist. Weiterhin betrifft die Erfindung ein Schneidrad sowie ein Verfahren zur Herstellung eines strukturierten Schneidrads gemäß dem Oberbegriff des Anspruch 1 bzw. 10. Diese sind aus der WO 2009/036742 A bekannt.

Schneidräder der eingangs genannten Art sind auch aus dem Stand der Technik bereits bekannt. Die Patentschrift EP 0 773 194 B1 beispielsweise offenbart ein Schneidrad mit einer Zahnstruktur entlang des Schneidradumfangs, wobei die Zahnstruktur in einer axialen Ansicht trapezförmig, rechteckig oder sägezahnartig geformt sein kann. Mit dieser Ausgestaltung des Schneidrads soll zur Verbesserung des Schneidergebnisses insbesondere ein Abrutschen des Schneidrads auf der Oberfläche des Schneidguts während des beim Schneidvorgang bewirkten Abrollens verhindert werden. Ein Verfahren zur Herstellung einer solchen Zahnstruktur wird in der Patentanmeldung EP 1 666 426 A1 offenbart, gemäß der die Zahnstruktur mittels eines Schleifwerkzeugs in die Schneidkante des Schneidrads eingeschliffen wird. Nachteilig bei diesen aus dem Stand der Technik bekannten Schneidrädern ist jedoch, dass die durch den Schneidvorgang im Schneidgut erzeugten Risse zu Bruchkanten mit einer für heutige Anwendungen nicht immer optimalen Kantenqualität führen.

Der vorliegenden Erfindung liegt daher die Aufgabe zu Grunde, ein Schneidrad mit einer modifizierten Schneidkantengeometrie anzugeben, mit welchem ein verbessertes Schneidergebnis erzielt wird. Der Erfindung liegt ebenfalls die Aufgabe zu Grunde, eine Schneidvorrichtung und ein Verfahren zur Herstellung eines strukturierten Schneidrads anzugeben.

Gemäß einer ersten Lehre der vorliegenden Erfindung wird die Aufgabe durch ein Schneidrad gemäß dem Anspruch 1 gelöst.

Der Erfindung liegt die Überlegung zu Grunde, unterschiedliche Schneidkantenwinkel an den ersten und zweiten Flanken der radial vorstehenden Abschnitte des Schneidrads vorzusehen, um eine Verbesserung des Schneidergebnisses zu erzielen. Die radial vorstehenden Abschnitte und die radial zurückstehenden Abschnitte bilden dabei eine entlang der Umfangsrichtung des Schneidrads bevorzugt durchgehende Schneidkante aus, welche das Eindringen des Schneidrads in das Schneidgut, beispielsweise Glas oder Keramik, erleichtert und die Schneideigenschaften, insbesondere die erzeugte Schnittkantenqualität im Schneidgut weiter verbessert. Die zweiten Flanken der radial vorstehenden Abschnitte weisen einen Schneidkantenwinkel auf, welcher kleiner als der Schneidkantenwinkel an den flachen Flanken der radial vorstehenden Abschnitte ist.

Auf diese Weise wird eine Vorzugsdrehrichtung des Schneidrads für den Schneidvorgang definiert. Die Vorzugsdrehrichtung ist derart, dass die zweiten Flanken der radial vorstehenden Abschnitte mit den kleinen Schneidkantenwinkeln beim Abrollen des Schneidrads auf dem Schneidgut zuerst in die Schneidgutoberfläche eindringen. Der kleine Schneidkantenwinkel erleichtert dabei das initiale Eindringen und legt die Grundlage für den weiteren Rissbildungsprozess. In der fortgesetzten Abrollbewegung kommt die Schneidgutoberfläche, beispielsweise eine Glasoberfläche, in Kontakt mit den Bereichen des radial vorstehenden Abschnitts, welche einen gegenüber der zweiten Flanke größeren Schneidkantenwinkel aufweisen. Auf diese Weise wird eine Aufkeilung des Risses in der Schneidgutoberfläche bewirkt, welche den zuerst von der zweiten Flanke erzeugten schmalen Riss in Schneidrichtung verbreitert und als Tiefenriss weiter in das Schneidgut hineintreibt. Durch die während des Abrollvorgangs auftretende Vergrößerung des Schneidkantenwinkels wird überdies eine vorteilhafte Krafteinleitung in das Schneidgut erreicht, so dass eine weitgehend splitterfreie Bruchkante von hoher Qualität erzeugt werden kann.

Weiterhin wird das Schneidergebnis mit dem erfindungsgemäßen Schneidrad derart verbessert, dass ein geringerer Anpressdruck auf die Schneidgutoberfläche erforderlich ist, um den gewünschten Ritzeffekt mit den damit verbundenen Tiefenrissen im Schneidgut entlang der Schneidlinie zu erzielen. Dadurch ist das Schneidrad insbesondere zum Schneiden dünner Schneidgüter, beispielsweise dünner Display-Gläser für TFT-Bildschirme, welche auf Grund ihrer geringen Dicke während des Schneidvorgangs durch die Vorspannung des Schneidradhalters auf der Schneidgutoberfläche hohen, teils kritischen Belastungen ausgesetzt sind, geeignet.

Das Schneidrad kann beispielsweise aus Hartmetall, insbesondere Wolframcarbid, oder aus einem polykristallinen Diamantmaterial gebildet sein. Zur weiteren Verbesserung der Schneideigenschaften und/oder zur Verminderung der Verschleißneigung kann das Schneidrad wenigstens an der Schneidkante und direkt angrenzenden Bereichen eine Beschichtung, beispielsweise aus Titannitrid, aufweisen.

Nach einer besonders vorteilhaften Ausgestaltung der Erfindung ist zudem die erste Flanke eines jeden radial vorstehenden Abschnitt flacher ausgebildet ist als die zweite Flanke dieses Abschnitts und der Schneidkantenwinkel an der ersten Flanke größer ist als der Schneidkantenwinkel an der zweiten Flanke. Insgesamt ergibt sich hierdurch eine asymmetrische Form der vorstehenden und entsprechend auch der zurückstehenden Abschnitte des Schneidrads, wobei das initiale Eindringen des vorstehenden Abschnitts durch die Flankensteilheit an der zuerst in das Material eindringenden zweiten Flanke des vorstehenden Abschnitts erleichtert wird.

Ebenso ist es jedoch auch möglich, eine asymmetrische Form der vorstehenden Abschnitte zu erzeugen, bei denen die flacheren erste Flanken einen kleineren Schneidkantenwinkel als die steileren zweiten Flanken aufweisen.

Die steilen Flanken können gegenüber dem geschliffenen Schneidkantenwinkel einen um etwa 0 bis 40° reduzierten Schneidkantenwinkel und die flachen Flanken gegenüber dem geschliffenen Schneidkantenwinkel einen um etwa 0 bis 40° vergrößerten Schneidkantenwinkel aufweisen. Beträgt der geschliffene Schneidkantenwinkel etwa ca. 125°, so weisen die steilen Flanken entsprechend einen Schneidkantenwinkel von etwa 85° bis 125° und die flachen Flanken einen Schneidkantenwinkel von etwa 125° bis 165° auf.

Als Schneidkantenwinkel wird hierbei der im axialen Querschnitt des Schneidrades gesehen von keilförmig aufeinander zulaufenden Seitenflächen, deren Berührungslinie die Schneidkante ausbildet, gebildete Winkel bezeichnet. Die steilen Flanken können somit insbesondere annähernd rechtwinklig gestaltet werden. Mit derart beinahe rechtwinkligen Schneidkantenwinkeln kann das erstmalige Eindringen eines der radial vorstehenden Abschnitte in die Schneidgutoberfläche während des Abrollens des Schneidrads begünstigt werden. Die höchste Erhebung des radial vorstehenden Abschnitts, also ein in axialer Richtung gesehen bevorzugt plateauartiger Bereich, welcher zwischen der steilen Flanke und der flachen Flanke angeordnet ist, kann einen zwischen diesen Intervallen gelegenen Winkel, beispielsweise von etwa 125°, aufweisen. Der Übergang vom kleinen zum großen Schneidkantenwinkel kann entlang der Umfangsrichtung kontinuierlich oder auch diskontinuierlich erfolgen. Die großen Schneidkantenwinkel der flachen Flanke von etwa 125° bis 165° bewirken den beschriebenen vorteilhaften Aufkeilungseffekt, wenn die in Abrollrichtung hinter der steilen Flanke gelegenen Bereiche der Schneidkante an dem durch die steile Flanke erzeugten Anfangsriss in Kontakt mit der Schneidgutoberfläche kommen und den Anfangsriss in Abrollrichtung verlängern und dann auch vertiefen.

Die radial zurückstehenden Abschnitte können in radialer Blickrichtung auf das Schneidrad eine V-Form aufweisen, wobei die Schenkel der radial zurückstehenden Abschnitte insbesondere einen stumpfen Winkel, vorzugsweise von etwa 145°, einschließen. Auf diese Weise wird insbesondere die Herstellung des mit der erfindungsgemäßen Geometrie versehenen Schneidrads, wobei die Geometrie eine durchgehende Schneidkante entlang des Umfangs aufweist, vereinfacht.

Die radial vorstehenden Abschnitte können in Umfangsrichtung eine Ausdehnung von etwa 5 bis 50 um aufweisen. Dabei sind je nach Anwendungsfall die vorstehenden Abschnitte in Umfangsrichtung kürzer oder länger ausgebildet als die zurückstehenden Abschnitte. Ist das Schneidrad beispielsweise zum Schneiden von hochempfindlichen Displayglas vorgesehen, so sind die vorstehenden Abschnitte kürzer ausgebildet als die zurückstehenden Abschnitte, d.h. das resultierende Längenverhältnis zwischen zurückstehenden und vorstehenden Abschnitten ist größer als 1. Hierdurch dringen die vorstehenden Abschnitte ("Zähne") leichter in das Material ein, so dass die Kraftbeaufschlagung der zu schneidenden empfindlichen Displayoberfläche durch die das Schneidrad umfassende Schneidvorrichtung insgesamt reduziert werden kann. Die damit allerdings verbundenen etwas verringerten Standzeiten derart beschaffener Schneidräder erweisen sich angesichts insgesamt hoher Produktionskosten in der Displayfertigung jedoch als insgesamt akzeptabel.

Dient das Schneidrad hingegen etwa der Durchtrennung vergleichweise dicker und damit unempfindlicher Glasscheiben, so wird das Längenverhältnis zwischen zurückstehenden und vorstehenden Abschnitten bevorzugt kleiner als 1 gewählt, da hier die Kraftbeaufschlagung der Oberfläche unkritisch ist und ausschließlich die Erzeugung optisch perfekter Schnittkanten im Vordergrund steht. Derartige Schneidräder zeichnen sich durch besonders hohe Standzeiten aus.

In axialer Richtung können die radial zurückstehenden Abschnitte eine Ausdehnung von etwa 200 µm, insbesondere symmetrisch zur Schneidkante, aufweisen..

Die radial vorstehenden Abschnitte und die radial zurückstehenden Abschnitte können einen radialen Höhenunterschied - wiederum abhängig von der gewählten Anwendung - von etwa ca. 3 bis ca. 15 µm aufweisen. Beispielsweise beträgt der Höhenunterschied zwischen den radial vorstehenden Abschnitten und die radial zurückstehenden Abschnitten eines Schneidrads, welches zum Schneiden ca. 0, 15 mm dünner Glasscheiben vorgesehen ist, ca. 3 µm. Beträgt die Eindringtiefe in die Schneidgutoberfläche beim Schneidvorgang weniger als der Höhenunterschied zwischen den radial vorstehenden Abschnitten und den radial zurückstehenden Abschnitten, kann die Wechselwirkung zwischen dem Schneidrad und dem Schneidgut auf bestimmte Bereiche der radial vorstehenden Abschnitte beschränkt werden. Untersuchungen der Anmelderin haben gezeigt, dass eine Eindringtiefe, der vorstehenden Abschnitte in die zu schneidende Oberfläche, welche geringfügig kleiner ist als der Höhenunterschied zwischen den radial vorstehenden Abschnitten und die radial zurückstehenden Abschnitten, optimale Ergebnisse liefert.

Ist eine weitergehende Wechselwirkung des Schneidrads mit dem Schneidgut während des Abrollvorgangs gewünscht, kann die Eindringtiefe auf wenigstens auf den Höhenunterschied zwischen den radial vorstehenden Abschnitten und die radial zurückstehenden Abschnitten eines Schneidrads vergrößert werden, so dass die gesamte Schneidkante mit der Schneidgutoberfläche in Kontakt kommt.

Gemäß einer weiteren Lehre der vorliegenden Erfindung wird die Aufgabe auch durch eine Schneidvorrichtung für spröde Materialien, insbesondere Keramik und/oder Glas, welche ein wie zuvor beschriebenes Schneidrad aufweist, gelöst.

Hinsichtlich der Vorteile und/oder vorteilhafter Ausgestaltungen der Schneidvorrichtung wird auf die Ausführungen zu dem erfindungsgemäßen Schneidrad verwiesen.

Gemäß einer weiteren Lehre der vorliegenden Erfindung wird die Aufgabe auch durch ein Verfahren zur Herstellung eines insbesondere wie zuvor beschriebenen, strukturierten Schneidrads gelöst, welches die folgenden Verfahrensschritte aufweist:
- Bereitstellen eines Schneidrads mit einer entlang des Umfangs verlaufenden Schneidkante, wobei die Schneidkante einen im Wesentlichen einheitlichen Schneidkantenwinkel aufweist;
- Bereitstellen einer Vorrichtung zur Erzeugung eines hochenergetischen Strahls;
- Einarbeiten einer Struktur in Form von radial vorstehenden Abschnitten und radial zurückstehenden Abschnitten in die Schneidkante unter Verwendung des hochenergetischen Strahls, wobei der hochenergetische Strahl im Wesentlichen parallel zur Ebene der Umfangslinie der Schneidkante auf das Schneidrad gerichtet wird, und wobei der hochenergetische Strahl derart in einer Richtung parallel zur Achse des Schneidrads quer über die Schneidkante geführt wird, dass der hochenergetische Strahl winklig zum Schneidrad-Radius an der Schneidkante auftrifft.

Mit dem hochenergetischen Strahl kann Material von dem bereitgestellten Schneidrad mit im Wesentlichen einheitlichen Schneidkantenwinkel an der Schneidkante abgetragen werden. Durch die spezielle Einfallsrichtung des hochenergetischen Strahls auf die Schneidkante des Schneidrads können die radial vorstehenden Abschnitte und radial zurückstehenden Abschnitte mit einer durchgehenden Schneidkante, welche an unterschiedlichen Stellen an der Struktur unterschiedliche Schneidkantenwinkel aufweist, in einfacher Weise und mit hoher Präzision eingearbeitet werden. Auf diese Weise lassen sich die vorstehend beschriebenen Schneidräder mit geringem Prozessaufwand herstellen. Die radial vorstehenden und optional auch asymmetrisch ausgebildeten Abschnitte mit einer entlang des Umfangs steilen Flanke und einer in der entgegengesetzten Richtung angeordneten flachen Flanke können weiterhin durch den gegenüber dem Schneidrad-Radius winkligen Einfall des hochenergetischen Strahls besonders einfach erzeugt werden.

Der hochenergetische Strahl wird zum Zwecke der Einarbeitung in einer Richtung parallel zur Achse des Schneidrads quer über die Schneidkante geführt, mit anderen Worten in einer Richtung senkrecht zur Ebene der Umfangslinie der Schneidkante. Auf diese Weise kann die Auslenkung des hochenergetischen Strahls quer über die Schneidkante hinweg möglichst kurz gehalten werden, so dass das Verfahren mit einem möglichst geringen Zeitaufwand ausführbar ist.

Als hochenergetischer Strahl kann ein Laserstrahl eines Kurzpulslasers, insbesondere eines Pikosekunden-Lasers oder Femtosekunden-Lasers, verwendet werden. Mittels kurzgepulster Laserstrahlung lässt sich der Materialabtrag sehr präzise durchführen und insbesondere mit einer hohen Oberflächengüte des abgetragenen Bereichs im Bereich der Schneidkante verbinden, da trotz sehr hoher erzielbarer Pulsleistungsdichte der Energieeintrag in das Material gering ist. Als geeignete Laserstrahlquellen stehen beispielsweise gütegeschaltete Nd:YAG-Laser mit Pulslängen im Pikosekundenbereich zur Verfügung. Gegebenenfalls sind diese Laser mit Frequenzvervielfachungen ausgestattet, die die Laserwellenlänge um ein Vielfaches verkürzen, was zu einer besseren Fokussierbarkeit des Strahls führt. Besonders bevorzugt und praktikabel ist eine Frequenzverdopplung auf eine Wellenlänge von 532 Nanometer.

Untersuchungen der Patentanmelderin haben in überraschender Weise gezeigt, dass durch den Einsatz eines Kurzpulslasers zur Formgebung bis zu 8 bis 10 µm Material von der Schneidkante des Schneidrads abgetragen werden können und dennoch eine wohl definierte und scharfe, also nicht abgestumpfte, durchgehende Schneidkante entlang des Umfangs des Schneidrads beibehalten werden kann. Das Einarbeiten der Struktur in die Schneidkante kann derart stabil ausgestaltet werden, dass die Formabweichungen der einzelnen radial vorstehenden Abschnitte gegeneinander bzw. der einzelnen radial zurückstehenden Abschnitte gegeneinander sehr gering sind, insbesondere weniger als einen Mikrometer betragen.

Es ist jedoch auch die Verwendung eines hochenergetischen Strahls anderer Art, beispielsweise eines hochenergetischen Plasmastrahls, denkbar.

Wird ein Kurzpulslaser, beispielsweise ein gütegeschalteter Nd:YAG-Laser, verwendet, kann dieser mit einer Pulslänge von etwa 10 Pikosekunden und einer Pulsfrequenz von etwa 500 kHz betrieben werden. Auf diese Weise kann ein zwecks Materialabtrags sehr gut kontrollierbarer Energieeintrag in das Material der zu bearbeitenden Schneidkante erzielt werden.

Der Kurzpulslaser kann einen Laserstrahl mit einem 1/e²-Strahldurchmesser innerhalb der Rayleighlänge von etwa 20 µm erzeugen. Auf diese Weise lassen sich die erfindungsgemäßen Strukturen mit Abmessungen, welche bis in die untere Mikrometerskala reichen, kontrolliert erzeugen. Grundsätzlich können jedoch auch andere Strahlradien verwendet werden. Durch die Wahl des Strahldurchmessers kann die Form der radial vorstehenden Abschnitte und radial zurückstehenden Abschnitte beeinflusst, insbesondere gesteuert, werden.

Das Schneidrad kann mittels eines Antriebs inkrementell gedreht werden, wobei der hochenergetische Strahl nach einem Drehinkrement zur Einarbeitung der radial vorstehenden Abschnitte und der radial zurückstehenden Abschnitte quer über die Schneidkante geführt wird.

Der hochenergetische Strahl kann weiterhin zur Einarbeitung eines radial zurückstehenden Abschnitts mehrfach, beispielsweise dreimal, quer und im Umfangsrichtung geringfügig versetzt über die Schneidkante des Schneidrads geführt werden. Die Form der radial zurückstehenden Abschnitte kann dabei beispielsweise durch die Wahl unterschiedlicher Abstände der einzelnen Schneidkantenquerungen des hochenergetischen Strahls - in Umfangsrichtung gesehen - beeinflusst und gesteuert werden.

Weiterhin ist es möglich, die Intensität, der Strahldurchmesser und/oder die Überquerungsgeschwindigkeit des hochenergetischen Strahls bei den Schneidkantenquerungen unterschiedlich einzustellen, um eine bestimmte Form der Struktur zu erzielen. Beispielsweise kann die Leistungsdichte bei der in Umfangsrichtung gesehen mittleren der beispielsweise drei Schneidkantenquerungen im Vergleich zu den äußeren Querungen sehr hoch eingestellt werden, um einen besonders tiefen radial zurückstehenden Abschnitt mit beispielsweise einer sehr steil ansteigenden angrenzenden steilen Flanke des benachbarten radial vorstehenden Abschnitts einzuarbeiten. Der Winkel, welchen die steile Flanke - in Umfangsrichtung gesehen - mit der Schneidrad-Tangente an dem entsprechenden Ort einschließt, kann bei sehr kleinem Strahldurchmesser (< 20 µm) dadurch beinahe rechtwinklig ausgebildet werden. Der verfahrenstechnische Aufwand zur Ausformung der radial vorstehenden Abschnitte und Einarbeitung der radial zurückstehenden Abschnitte an bzw. in der Schneidkante kann mit dieser Vorgehensweise gering gehalten werden.

Der Winkel zwischen dem hochenergetischen Strahl und dem Schneidrad-Radius kann etwa 125° bis 145° betragen. Der Schneidrad-Radius repräsentiert in diesem Fall einen Radialvektor, welcher sich vom Schneidradzentrum im Bereich der Schneidrad-Achse in Richtung radial auswärts bis zum Auftreffpunkt des hochenergetischen Strahls an der Schneidkante erstreckt. Der hochenergetische Strahl wiederum repräsentiert einen Ausbreitungsvektor, welcher in Richtung des Schneidrads zeigt. Bei einem frontalen Auftreffen des hochenergetischen Strahls auf der Schneidkante würden die beiden Vektoren einen Winkel von 180° einschließen. Bei einem tangentialen Einfall des hochenergetischen Strahls wiederum würde der von den Vektoren eingeschlossene Winkel 90° betragen. Die vorteilhaften Eigenschaften des Verfahrens werden jedoch dadurch erzielt, dass der hochenergetische Strahl winklig zum Schneidrad-Radius auftrifft, d.h. unter einem stumpfen Winkel, insbesondere zwischen 125° und 145°.

Es gibt vielfältige Möglichkeiten, das erfindungsgemäße Schneidrad oder das erfindungsgemäße Verfahren auszugestalten und weiterzubilden. Hierzu wird einerseits auf die abhängigen Patentansprüche und andererseits auf die Erläuterung von Ausführungsbeispielen in Verbindung mit der beigefügten Zeichnung verwiesen. In der Zeichnung zeigen:
- Fig. 1: eine Frontalansicht eines Schneidrads in schematischer Darstellung,
- Fig. 2a,b: eine schematische Seitenansicht des Schneidrads, bei dem mittels eines gepulsten Laserstrahls eine Struktur in die Schneidkante des Schneidrads eingearbeitet wird,
- Fig. 3: eine schematische Darstellung zur Illustration der Einfallsrichtung des Laserstrahls auf die Schneidkante des Schneidrads,
- Fig. 4: einen Querschnitt durch die Ebene der Umfangslinie des Schneidrads mit der in die Schneidkante eingearbeiteten Struktur,
- Fig. 5: eine Darstellung unterschiedlicher Schneidkantenwinkel,
- Fig. 6: die Form der radial vorstehenden Abschnitte und radial zurückstehenden Abschnitte eines Ausführungsbeispiels des erfindungsgemäßen Schneidrads in radialer Blickrichtung,
- Fig. 7a,b: die gemessene Schneidkantenkontur beim Eindringen in eine Glasoberfläche und der Verlauf der dazugehörigen Schneidkantenwinkel und
- Fig. 8: eine Messvorschrift zur Bestimmung des Längenverhältnisses in Umfangsrichtung zwischen zurückstehenden und vorstehenden Abschnitten in einem Schneidrad.

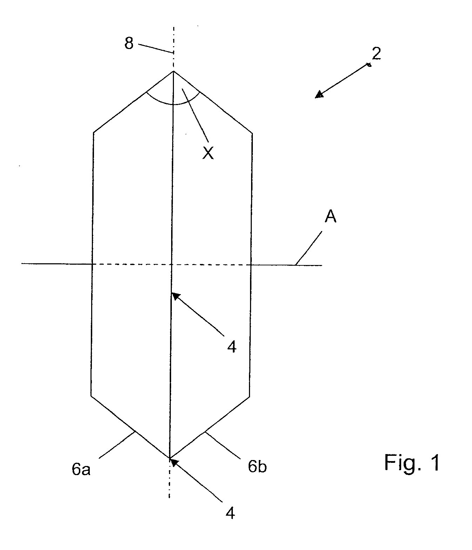

Figur 1 zeigt in einer schematischen Frontalansicht ein unstrukturiertes Schneidrad 2 mit entlang des gesamten Umfangs verlaufender Schneidkante 4. Das Schneidrad 2 weist in diesem Beispiel Rotationssymmetrie gegenüber einer Achse A auf, welche als Drehachse des Schneidrads 2 während des Schneidvorgangs verwendet wird. Die Schneidkante 4 wird von zwei im axialen Querschnitt keilförmig zulaufenden Seitenflächen 6a, 6b, die jeweils Kegelstumpfform aufweisen, gebildet. Die Seitenflächen 6a, 6b schließen einen - in dieser schematischen Darstellung einheitlichen - Schneidkantenwinkel X zwischen sich ein. Der Schneidkantenwinkel X kann bei dem Schneidrad der Fig. 1 beispielsweise 125° betragen. Das Schneidrad 2 kann ferner aus einem Hartmetall, beispielsweise Wolframcarbid, hergestellt sein. Durch das Zusammenlaufen der Seitenflächen 6a, 6b wird mit der Schneidkante 4 auch eine Umfangslinie gebildet, welche im Wesentlichen eine Ebene 8 (in dieser Darstellung senkrecht zur betrachteten Ebene angeordnet und daher als Linie dargestellt) aufspannt. Die Ebene 8 der Umfangslinie verläuft vorliegend senkrecht zu der Schneidrad-Achse A.

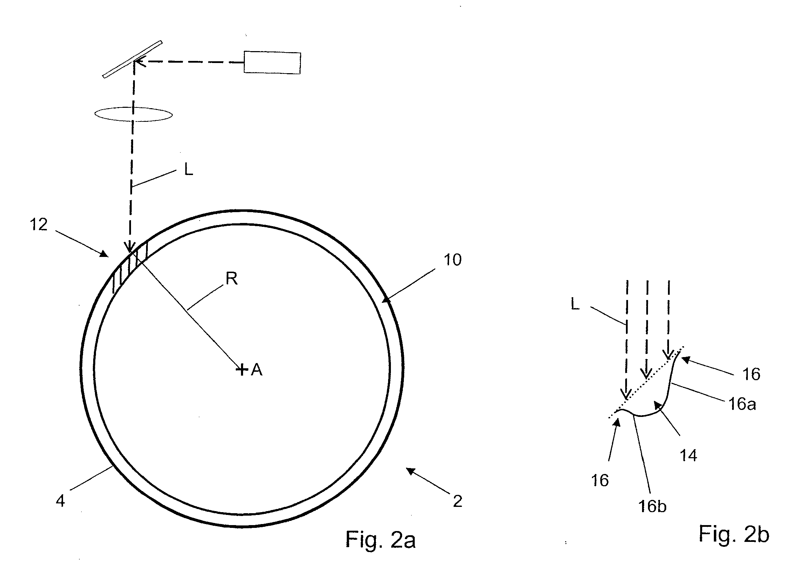

Figur 2a zeigt eine Seitenansicht des Schneidrads 2 aus Figur 1. Der Bereich der Seitenflächen 6a, 6b, welche im Querschnitt keilförmig aufeinander zu laufen und damit die Umfangslinie bzw. die Schneidkante 4 ausbilden, ist in Figur 2 mit dem Bezugszeichen 10 gekennzeichnet. Ein hochenergetischer Strahl L, vorliegend der Laserstrahl eines Kurzpulslasers, ist auf eine Stelle 12 an der Schneidkante 4 des Schneidrads 2 gerichtet, um Material zur Einarbeitung von radial zurückstehenden Abschnitten 14 in die Schneidkante 4 und zur Formgebung von radial vorstehenden Abschnitten 16 an der Schneidkante 4 abzutragen. Der gepulste Laserstrahl L wird dabei im Wesentlichen parallel zur Ebene 8 der Umfangslinie des Schneidrads 2 geführt, d.h. in der Zeichenebene, und in einer Bewegung, welche parallel zur Achse A des Schneidrads 2 - d.h. gleichgerichtet, aber mit einem bestimmten räumlichen Versatz - verläuft, quer über die Schneidkante 4 geführt. Diese Bewegung kann beispielsweise durch einen zumindest einachsigen Galvanometerscanner erzeugt werden (In Fig. 2a dargestellt durch einen in Strahlausbreitungsrichtung vor einer Fokussieroptik angeordneten Spiegel). In der gewählten Darstellung der Fig. 2 erfolgt die Bewegung senkrecht zur Zeichenebene.

Figur 2b zeigt das Einwirken des Laserstrahls L auf das Material des Schneidrads 2 an der Schneidkante 4 in einer Detailansicht. Der ursprüngliche Verlauf der Schneidkante 4 wird durch die gepunktete Linie wiedergegeben. Durch den zum Radius R (siehe Figur 2a) winkligen Einfall des hochenergetischen Strahls L werden die radial vorstehenden Abschnitte 16 und die radial zurückstehenden Abschnitte 14 mit einer in Umfangsrichtung asymmetrischen Struktur eingearbeitet, wobei die radial vorstehenden Abschnitte 16 entlang des Umfangs eine flache Flanke 16a und eine steile Flanke 16b aufweisen. Für den Übergang von einer flachen Flanke 16a eines radial vorstehenden Abschnitts 16 über einen radial zurückstehenden Abschnitt 14 bis zu einer steilen Flanke 16b des benachbarten radial vorstehenden Abschnitts 16 muss der Laserstrahl L in diesem Beispiel lediglich dreimal in einer Richtung parallel zur Schneidrad-Achse A quer über die Schneidkante 4 geführt werden.

Durch Verwendung der in Fig. 2a schematisch dargestellten Strahlablenkoptik (Scanner) kann jede Überquerung der Schneidkante 4 zur Formgebung bzw. zum Materialabtrag genutzt werden. Die Formgebung der Struktur kann beispielsweise durch die Abstände der Schneidkantenquerungen zueinander - in Umfangsrichtung gesehen - beeinflusst werden. Weiterhin ist es möglich, die Intensität, den Radius des auf das Werkstück fokussierten Laserstrahls L und/oder die Überquerungsgeschwindigkeit des Laserstrahls L für jede einzelne Schneidkantenquerung individuell einzustellen, um eine bestimmte Form der radial zurückstehenden Abschnitte 14 und radial vorstehenden Abschnitte 16 zu erzielen.

Um sukzessive mehrere radial zurückstehende Abschnitte 14 bzw. radial vorstehende Abschnitte 16 in die Schneidkante 4 des Schneidrads 2 einzuarbeiten, kann das Schneidrad 2 mittels eines Antriebs (nicht gezeigt) inkrementell gedreht werden, wobei der Laserstrahl L nach einem Drehinkrement zur Einarbeitung der radial vorstehenden Abschnitte 16 und der radial zurückstehenden Abschnitte 14, gegebenenfalls mehrmals, beispielsweise dreifach, quer über die Schneidkante 4 geführt wird.

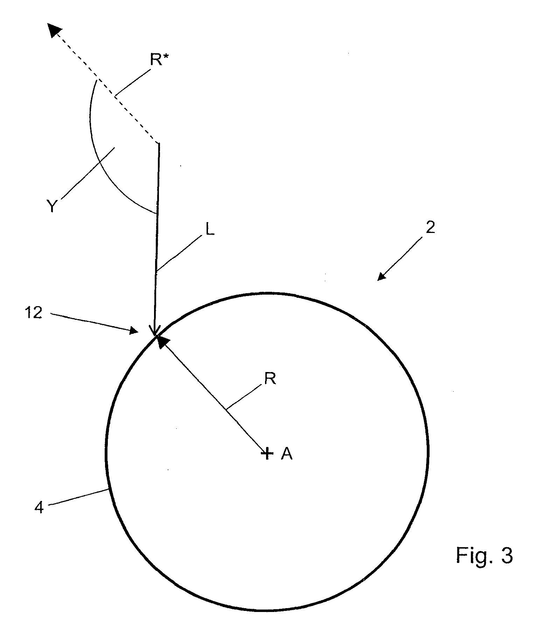

Figur 3 zeigt eine ähnliche Ansicht wie Figur 2a. Allerdings ist in Figur 3 eine vektorielle Darstellung zur Verdeutlichung der Einfallsrichtung des Laserstrahls L auf die Schneidkante 4 des Schneidrads 2 gewählt. Der Laserstrahl L trifft an einem bestimmten Punkt 12 an der Schneidkante 4 des Schneidrads 2 auf. Zwischen dem radialen Zentrum des Schneidrads 2, welches von der Achse A des Schneidrads repräsentiert wird, und diesem Auftreffpunkt 12 erstreckt sich ein Radialvektor R. Wie dargestellt, schließen ein zum Ursprung eines den Laserstrahl L repräsentierenden Ausbreitungsvektors L verschobener Radialvektor R* und dieser Ausbreitungsvektor L einen Winkel Y zwischen sich ein, welcher bevorzugt zwischen 125° und 145° beträgt. Es sind auch andere stumpfe Winkel Y zwischen den beiden Vektoren L, R* möglich. Als Grenzwinkel kann ein rechter Winkel angegeben werden, was einem tangentialen Einfall des hochenergetischen Strahls L auf das Schneidrad 2 entspräche. Mit einem tangentialen Einfall ist ersichtlich keine Bearbeitung der Schneidkante 4 des Schneidrads 2 möglich. Ein Winkel Y = 180° bedeutet wiederum, dass der Radialvektor R und der Ausbreitungsvektor L einander entgegen gerichtet sind, wodurch die gewünschte Asymmetrie der vorstehenden Bereiche nicht erzielt werden kann. Durch den zum Schneidrad-Radius R winkligen Einfall des hochenergetischen Strahls L lässt sich dagegen in einfacher Weise und mit hoher Präzision die gewünschte in Umfangsrichtung asymmetrische Form der radial vorstehenden Abschnitte 16 und radial zurückstehenden Abschnitte 14 erzielen.

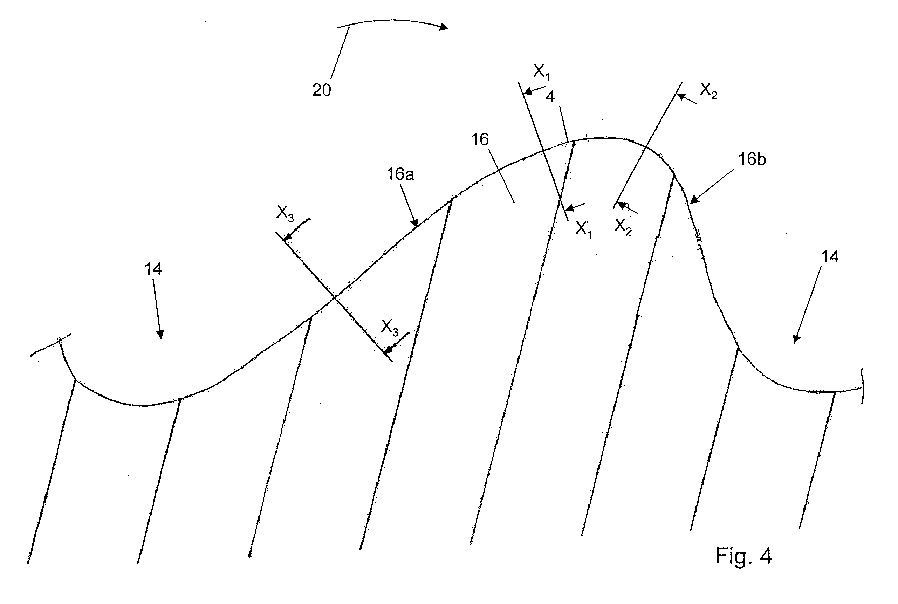

Figur 4 zeigt im Querschnitt durch die Ebene 8 der Umfangslinie des Schneidrads 2 beispielhaft einen radial vorstehenden Abschnitt 16 an der Schneidkante 4 mit den benachbarten radial zurückstehenden Abschnitten 14. Die radial zurückstehenden Abschnitte 14 bestehen in diesem Beispiel im Wesentlichen aus den Bereichen, welche der Schneidrad-Achse A radial einwärts am nächsten sind. Der radial vorstehende Abschnitt 16 hingegen weist eine in Umfangsrichtung flache Flanke 16a und eine steile Flanke 16b auf, welche durch das vorstehend beschriebene Ausführungsbeispiel des Verfahrens in einfacher Weise mit einer einzigen oder wenigen Schneidkantenquerungen des hochenergetischen Strahls L erzeugt werden können.

Die radial vorstehenden Abschnitte 16 können in Umfangsrichtung eine Ausdehnung von etwa 5 bis 50 µm aufweisen. Der radiale Höhenunterschied zwischen den radial vorstehenden Abschnitten 16 und den radial zurückstehenden Abschnitten 14 kann etwa 9 bis 10 µm betragen.

Die Schneidkante 4 erstreckt sich in diesem Beispiel durchgehend über die radial vorstehenden Abschnitte 16 und radial zurückstehenden Abschnitte 14 entlang des gesamten Umfangs und weist an unterschiedlichen Stellen der Struktur, beispielsweise an den flachen Flanken 16a und den steilen Flanken 16b, unterschiedliche Schneidkantenwinkel X - also Winkel, unter denen die Seitenflächen 6a, 6b im Querschnitt keilförmig aufeinander zulaufen - auf.

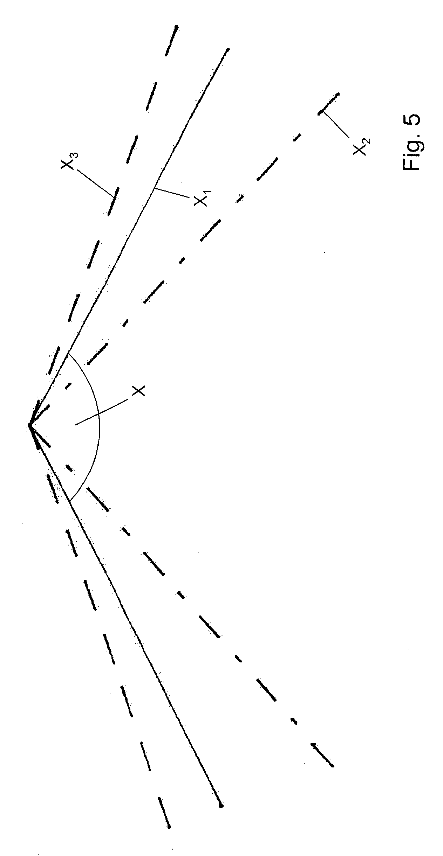

Dies wird schematisch durch drei Querschnittsansichten, welche sich senkrecht zu der Ansichtsrichtung aus Figur 4 erstrecken, in Figur 5 verdeutlicht. An der höchsten radialen Erhebung des in Figur 4 dargestellten radial vorstehenden Abschnitts 16 wurde die Schneidkante 4 des Schneidrads 2 kaum bearbeitet, so dass der ursprünglich vorhandene Schneidkantenwinkel X₁ dort bei dem vorliegenden Ausführungsbeispiel etwa 125° beträgt. Im Bereich der steilen Flanke 16b hingegen wurde durch das zuvor beschriebene Verfahren Material der Schneidkante 4 derart abgetragen, so dass der Schneidkantenwinkel X₂ dort zugespitzt - also kleiner als der ursprüngliche Schneidkantenwinkel X₁ - ist. Dieser kleinere Schneidkantenwinkel X₂ kann zwischen 85° und 125° betragen. Andererseits wurde auch der Bereich der flachen Flanke 16a des radial vorstehenden Abschnitts 16 bearbeitet, so dass der Schneidkantenwinkel X₃ dort gegenüber dem ursprünglichen Schneidkantenwinkel X₁ abgestumpft - also größer - ist. Dieser vergrößerte Schneidkantenwinkel X₃ kann zwischen 125° und 165° betragen. Aufgrund der präzisen Bearbeitung mit einem Laserstrahl L, und dem damit verbundenen Materialabtrag ist es möglich, in den bearbeiteten Bereichen der Schneidkante 4 eine scharfe, also kaum abgerundete, Schneidkantenstruktur bei unveränderter Materialhärte beizubehalten.

Durch die unterschiedlichen Schneidkantenwinkel X₁, X₂, X₃ und die Flankenasymmetrie der vorstehenden Bereiche 16 wird eine Vorzugsdrehrichtung 20 (siehe Figur 4) für das Schneidrad 2 definiert. Diese Vorzugsdrehrichtung 20 ist derart, dass beim Abrollen des Schneidrads 2 auf der Schneidgutoberfläche die steile Flanke 16b der radial vorstehenden Abschnitte 16 zuerst mit der Schneidgutoberfläche in Berührung kommt. Durch den vergleichsweise spitzen Schneidkantenwinkel X₂ an der steilen Flanke 16b wird das initiale Eindringen des Schneidrads 2 in die Schneidgutoberfläche erleichtert. Die Vergrößerung des Schneidkantenwinkels X₁, X₃ im weiteren Abrollvorgang sorgt dann vorteilhafter Weise für eine Aufkeilung und damit Vergrößerung des durch den radial vorstehenden Abschnitt 16 erzeugten Risses. Auf diese Weise kann eine hohe Bruchkantenqualität mit geringer Neigung zu Splitterbildung erzielt werden. Auch der Anpressdruck des Schneidrads 2 auf die Schneidgutoberfläche kann auf diese Weise um etwa 20% gegenüber Schneidrädern, welche die aus dem Stand der Technik bekannten Schneidkantenstrukturen aufweisen, verringert werden, was insbesondere bei empfindlichem Schneidgut, beispielsweise dünnen Displayglasscheiben, von großem Vorteil ist.

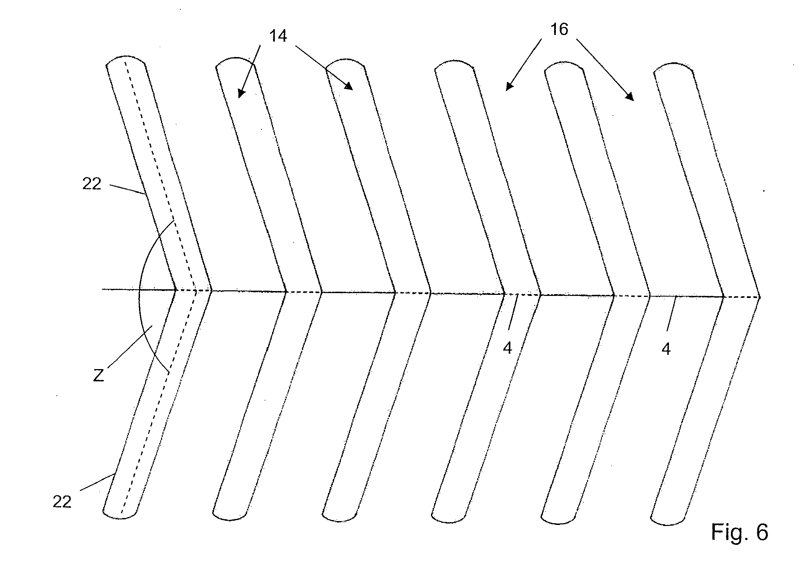

Figur 6 zeigt in einem Ausführungsbeispiel die V-förmige Gestalt der radial zurückstehenden Abschnitte 14, welche durch den zum Schneidrad-Radius winkligen Einfall des hochenergetischen Strahls L erzeugt wird. Je nach Art des winkligen Einfalls kann der Winkel Z zwischen den Schenkeln 22 der radial zurückstehenden Abschnitte 14 theoretisch zwischen 0° und 180° betragen. Vorzugsweise wird die Einfallsrichtung so gewählt, dass sich ein stumpfer Winkel Z ergibt. Im vorliegenden Beispiel der Figur 6 beträgt der Winkel Z etwa 144°.

Die in Figur 6 gezeigten radial zurückstehenden Abschnitte 14 können eine axiale Ausdehnung von etwa 200 µm aufweisen. In dem gezeigten Beispiel erstrecken sich die Schenkel 22 der radial zurückstehenden Abschnitte 14 in axialer Richtung symmetrisch um +/- 100 µm um die Schneidkante 4 herum.

Die Schneidkante 4 erstreckt sich sowohl über die radial vorstehenden Abschnitte 16, als auch über die radial zurückstehenden Abschnitte 14 und kann daher vorteilhaft genutzt werden, wenn eine Eindringtiefe des Schneidrads 2 in die Schneidgutoberfläche vorgesehen ist, welche den Höhenunterschied zwischen den radial vorstehenden Abschnitten 16 und radial zurückstehenden Abschnitten 14 übersteigt.

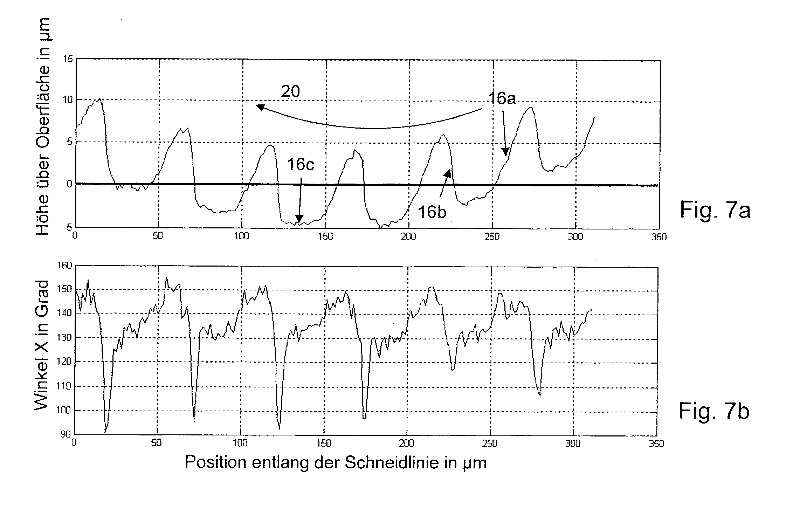

Die Fig. 7a,b zeigen die gemessene Schneidkantenkontur beim Eindringen in eine Glasoberfläche und der Verlauf der dazugehörigen Schneidkantenwinkel.

Im Einzelnen ist in Fig. 7a die Zahnstruktur mit radial vorstehenden Abschnitten 16 und radial zurückstehenden Abschnitten 14 entlang eines Winkelbereichs von abgeschätzten 20° des Schneidrads dargestellt. Erkennbar sind die steilen Flanken 16b und die flachen Flanken 16a eines jeden vorstehenden Abschnitts. Hierzu entsprechend zeigt Fig. 7b den Verlauf des Schneidkantenwinkels X. Deutlich erkennbar ist der periodische steile Abfalls des Schneidkantenwinkels X auf Werte von ca. 90° im Bereich der steilen Flanke sowie wie periodischen relativen Maxima der Kurve im Bereich des Auslaufes der flachen Flanke im Bereich von 150°. Ferner zeigt Fig. 7a, dass die vorstehenden Abschnitte 16 mit einem ausgeprägten Plateau 16c ausgebildet sein können, im Bereich dessen der Schneidkantenwinkel X - im Rahmen der Messgenauigkeit - im Wesentlichen konstant ca. 130° beträgt.

Anzumerken hier ist, dass der in Fig. 7b ablesbare Schneidkantenwinkel X etwa 5° bis 8° höher liegt als der in Fig. 1 definierte makroskopische Schneidkantenwinkel X. Der Grund hierfür ist, dass aufgrund der Erzeugung der Flankenflächen 6a, 6b in einem Schleifprozess der unmittelbar an die Schneidkante 4 angrenzende Bereich der Flankenflächen 6a, 6b, welcher sich in axialer Richtung des Schneidrads 2 lediglich über einige 10 µm erstreckt, gegenüber der übrigen Flankenfläche 6a, 6b leicht abgeflacht ist, so dass unmittelbar um die Schneidkante 4 geringfügig größere Schneidkantenwinkel X gemessen werden (vgl. Fig. 7b) als die in Zusammenhang mit Fig. 1 und 5 angegebenen.

In Fig. 7a ist zudem als horizontale Nulllinie die Oberfläche einer zu schneidenden Glasplatte eingezeichnet. Von den dargestellten sechs vorstehenden Abschnitt 16 dringen vier deutlich erkennbar in das Glas ein. Die maximale Eindringtiefe betrifft hierbei ca. 5 µm, was in etwa der halben Höhendifferenz zwischen den vorstehenden und den zurückstehenden Abschnitten 16, 14 entspricht. Die eingezeichnete Drehrichtung 20 des Schneidrads stellt sicher, dass zunächst die steilen Flanken 16b eines jeden vorstehenden Abschnitts 16 in die Glasoberfläche eindringen.

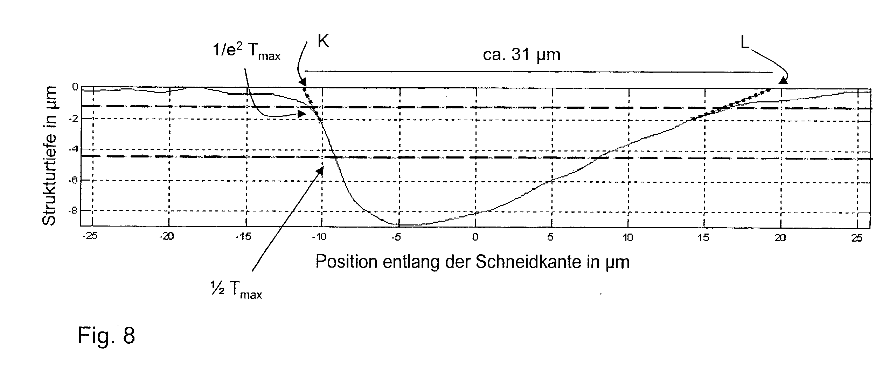

Fig.8 zeigt schließlich eine Messvorschrift zur Bestimmung des Längenverhältnisses in Umfangsrichtung zwischen zurückstehenden und vorstehenden Abschnitten in einem Schneidrad. Da ein in Umfangsrichtung gleichsam punktueller Übergang zwischen den vorstehenden und den zurückstehenden Abschnitten in der Praxis nicht existiert, muss für eine definierte Einstellung des vorstehend genannten Längenverhältnisses eine geeignete Messvorschrift gefunden werden.

So erweist es sich als zweckmäßig, bei einem zurückstehenden Abschnitt die Position in Umfangsrichtung der halben Strukturtiefe 1/2 Tₘₐₓ und der Strukturtiefe 1/e² Tₘₐₓ, bei der der maximale Strukturtiefenwert Tₘₐₓ auf den 1/e²-ten Teil abgefallen ist, zu bestimmen (gestrichelte Linien). Aus den beiden Positionspunktepaaren ergibt sich für die erste und zweite Flanke jeweils eine Steigung. An die erste und zweite Flanke werden Tangenten (gepunktete Linien) mit der korrespondierenden Steigung angelegt. Aus den Verlängerungen dieser Tangenten bis zur Nulllinie (Höhe des unstrukturierten / vorstehenden Bereichs) ergeben sich zwei Punkte K,L , deren Abstand die Strukturbreite ergibt.

Die Länge des zurückstehenden Abschnitts lässt sich demgemäß mit ca. 31 µm ablesen.

## Patentansprüche

1. Schneidrad (2) zum Schneiden spröder Materialien, beispielsweise Keramik und/oder Glas, mit einer entlang des Umfangs verlaufenden Schneidkante (4), wobei die Schneidkante (4) eine Struktur in Form von radial vorstehenden Abschnitten (16) und radial zurückstehenden Abschnitten (14) aufweist, wobei
jeder radial vorstehende Abschnitt (16) in Umfangsrichtung gesehen auf einer Seite in einer ersten Flanke (16a) in den jeweils benachbarten radial zurückstehenden Abschnitt (14) übergeht und auf der entgegen gesetzten Seite in einer zweiten Flanke (16b) in den jeweils anderen benachbarten radial zurückstehenden Abschnitt (14) übergeht, **dadurch gekennzeichnet, dass** der Schneidkantenwinkel (X) an der ersten Flanke (16a) größer als an der zweiten Flanke (16b) ist.

2. Schneidrad (2) nach Anspruch 1,
**dadurch gekennzeichnet, dass**
die erste Flanke (16a) eines jeden radial vorstehenden Abschnitt (16) flacher ausgebildet ist als die zweite Flanke (16b) dieses Abschnitts und der Schneidkantenwinkel (X) an der ersten Flanke (16a) größer ist als der Schneidkantenwinkel (X) an der zweiten Flanke (16b).

3. Schneidrad nach Anspruch 1 oder 2,
**dadurch gekennzeichnet, dass**
die radial vorstehenden Abschnitte und die radial zurückstehenden Abschnitte eine entlang der Umfangsrichtung des Schneidrads durchgehende Schneidkante ausbilden.

4. Schneidrad nach einem der Ansprüche 1 bis 3,
**dadurch gekennzeichnet, dass**
die radial zurückstehenden Abschnitte (14) in radialer Blickrichtung auf das Schneidrad (2) eine V-Form aufweisen, wobei die Schenkel (22) der radial zurückstehenden Abschnitte (14) insbesondere einen stumpfen Winkel Z, vorzugsweise von etwa 145°, einschließen.

5. Schneidrad nach Anspruch 2,
**dadurch gekennzeichnet, dass**
die steilen Flanken (16b) einen gegenüber dem geschliffenen Schneidkantenwinkel (X, X₁) um etwa 0 bis 40° reduzierten Schneidkantenwinkel (X₂) und die flachen Flanken (16a) einen gegenüber dem geschliffenen Schneidkantenwinkel (X, X₁) um etwa 0 bis 40° vergrößerten Schneidkantenwinkel (X₃) aufweisen.

6. Schneidrad nach einem der Ansprüche 1 bis 5,
**dadurch gekennzeichnet, dass**
die radial vorstehenden Abschnitte (16) in Umfangsrichtung eine Ausdehnung von etwa 5 bis 50 µm aufweisen.

7. Schneidrad nach einem der Ansprüche 1 bis 6,
**dadurch gekennzeichnet, dass**
die radial zurückstehenden Abschnitte (14) eine axiale Ausdehnung von etwa 200 µm, insbesondere symmetrisch zur Schneidkante (4), aufweisen.

8. Schneidrad nach einem der Ansprüche 1 bis 7,
**dadurch gekennzeichnet, dass**
die radial vorstehenden Abschnitte (16) und die radial zurückstehenden Abschnitte (14) einen radialen Höhenunterschied von etwa 3 bis 15 µm aufweisen.

9. Schneidvorrichtung für spröde Materialien, insbesondere Keramik und/oder Glas, welche ein Schneidrad (2) nach einem der Ansprüche 1 bis 8 aufweist.

10. Verfahren zur Herstellung eines strukturierten Schneidrads, insbesondere nach einem der Ansprüche 1 bis 8, welches die folgenden Verfahrensschritte aufweist:
- Bereitstellen eines Schneidrads mit einer entlang des Umfangs verlaufenden Schneidkante, wobei die Schneidkante einen im Wesentlichen einheitlichen Schneidkantenwinkel aufweist;
- Bereitstellen einer Vorrichtung zur Erzeugung eines hochenergetischen Strahls;
- Einarbeiten einer Struktur in Form von radial vorstehenden Abschnitten und radial zurückstehenden Abschnitten in die Schneidkante unter Verwendung des hochenergetischen Strahls, wobei der hochenergetische Strahl im Wesentlichen parallel zur Ebene der Umfangslinie der Schneidkante auf das Schneidrad gerichtet wird, und wobei der hochenergetische Strahl derart in einer Richtung parallel zur Achse des Schneidrads quer über die Schneidkante geführt wird, **dadurch gekennzeichnet, dass** der hochenergetische Strahl winklig zum Schneidrad-Radius an der Schneidkante auftrifft.

11. Verfahren nach Anspruch 10,
**dadurch gekennzeichnet, dass**
als hochenergetischer Strahl ein Laserstrahl eines Kurzpulslasers, insbesondere eines Pikosekunden-Lasers oder Femtosekunden-Lasers, verwendet wird.

12. Verfahren nach Anspruch 10,
**dadurch gekennzeichnet, dass**
der Kurzpulslaser mit einer Pulslänge von etwa 10 Pikosekunden und einer Pulsfrequenz von etwa 500 kHz betrieben wird.

13. Verfahren nach Anspruch 11 oder 12,
**dadurch gekennzeichnet, dass**
der Kurzpulslaser einen Laserstrahl mit einem 1/e²-Strahldurchmesser von etwa 20 µm erzeugt.

14. Verfahren nach einem der Ansprüche 10 bis 13,
**dadurch gekennzeichnet, dass**
das Schneidrad mittels eines Antriebs inkrementell gedreht wird, wobei der hochenergetische Strahl nach einem Drehinkrement zur Einarbeitung der radial vorstehenden Abschnitte und der radial zurückstehenden Abschnitte quer über die Schneidkante geführt wird.

15. Verfahren nach einem der Ansprüche 9 bis 14,
**dadurch gekennzeichnet, dass**
der hochenergetische Strahl zur Einarbeitung eines radial zurückstehenden Abschnitts mehrfach quer über die Schneidkante des Schneidrads geführt wird.

16. Verfahren nach einem der Ansprüche 9 bis 15,
**dadurch gekennzeichnet, dass**
die Intensität, den Strahldurchmesser und/oder die Überquerungsgeschwindigkeit des hochenergetischen Strahls während der einzelnen Schneidkantenquerungen zwecks Beeinflussung der Formgebung der Struktur unterschiedlich variiert werden.

17. Verfahren nach einem der Ansprüche 9 bis 16,
**dadurch gekennzeichnet, dass**
der Winkel zwischen dem hochenergetischen Strahl und dem Schneidrad-Radius etwa 125° bis 145° beträgt.

## Claims

1. Cutting wheel (2) for cutting brittle materials, for example ceramic and/or glass, having a cutting edge (4) running along the circumference, wherein the cutting edge (4) has a structure in the form of radially projecting sections (16) and radially recessed sections (14), wherein each radially projecting section (16), as seen in the circumferential direction, on one side merges in a first flank (16a) into the respectively adjacent radially recessed section (14) and on the opposite side merges in a second flank (16b) into the respective other adjacent radially recessed section (14), **characterised in that** the cutting edge angle (X) is greater on the first flank (16a) than on the second flank (16b).

2. Cutting wheel (2) according to claim 1, **characterised in that** the first flank (16a) of each radially projecting section (16) is flatter than the second flank (16b) of said section, and the cutting edge angle (X) on the first flank (16a) is greater than the cutting edge angle (X) on the second flank (16b).

3. Cutting wheel according to claim 1 or 2, **characterised in that** the radially projecting sections and the radially recessed sections form a cutting edge that is continuous along the circumferential direction of the cutting wheel.

4. Cutting wheel according to one of claims 1 to 3, **characterised in that** the radially recessed sections (14), as seen in a radial view towards the cutting wheel (2), have a V shape, wherein the legs (22) of the radially recessed sections (14) enclose in particular an obtuse angle Z, preferably of approximately 145°.

5. Cutting wheel according to claim 2, **characterised in that** the steep flanks (16b) have a cutting edge angle (X2) that is reduced by approximately 0 to 40° relative to the ground cutting edge angle (X, X1) and the flat flanks (16a) have a cutting edge angle (X3) that is enlarged by approximately 0 to 40° relative to the ground cutting edge angle (X, X1).

6. Cutting wheel according to one of claims 1 to 5, **characterised in that** the radially projecting sections (16) have an extension of approximately 5 to 50 µm in the circumferential direction.

7. Cutting wheel according to one of claims 1 to 6, **characterised in that** the radially recessed sections (14) have an axial extension of approximately 200 µm, in particular symmetrical to the cutting edge (4).

8. Cutting wheel according to one of claims 1 to 7, **characterised in that** the radially projecting sections (16) and the radially recessed sections (14) have a radial height difference of approximately 3 to 15 µm.

9. Cutting device for brittle materials, in particular ceramic and/or glass, which comprises a cutting wheel (2) according to one of claims 1 to 8.

10. Method for producing a structured cutting wheel, in particular according to one of claims 1 to 8, which comprises the following method steps:
- providing a cutting wheel having a cutting edge running along the circumference, wherein the cutting edge has a substantially uniform cutting edge angle;
- providing a device for generating a high-energy beam;
- creating a structure in the form of radially projecting sections and radially recessed sections in the cutting edge using the high-energy beam, wherein the high-energy beam is directed onto the cutting wheel substantially parallel to the plane of the circumferential line of the cutting edge, and wherein the high-energy beam is guided transversely over the cutting edge in a direction parallel to the axis of the cutting wheel, **characterised in that** the high-energy beam impinges on the cutting edge at an angle to the cutting wheel radius.

11. Method according to claim 10, **characterised in that** a laser beam of a short-pulse laser, in particular of a picosecond laser or femtosecond laser, is used as the high-energy beam.

12. Method according to claim 10, **characterised in that** the short-pulse laser is operated with a pulse length of approximately 10 picoseconds and at a pulse frequency of approximately 500 kHz.

13. Method according to claim 11 or 12, **characterised in that** the short-pulse laser generates a laser beam having a 1/e2 beam diameter of approximately 20 µm.

14. Method according to one of claims 10 to 13, **characterised in that** the cutting wheel is turned incrementally by means of a drive, wherein the high-energy beam is guided transversely over the cutting edge after one turning increment in order to create the radially projecting sections and the radially recessed sections.

15. Method according to one of claims 9 to 14, **characterised in that** the high-energy beam is guided transversely over the cutting edge of the cutting wheel multiple times in order to create a radially recessed section.

16. Method according to one of claims 9 to 15, **characterised in that** the intensity, the beam diameter and/or the crossing speed of the high-energy beam are varied differently during the individual crossings of the cutting edge in order to influence the shaping of the structure.

17. Method according to one of claims 9 to 16, **characterised in that** the angle between the high-energy beam and the cutting wheel radius is approximately 125° to 145°.

## Revendications

1. Molette de coupe (2) servant à couper des matériaux fragiles, par exemple de la céramique et/ou du verre, comportant un bord de coupe (4) s'étendant le long de la circonférence, où le bord de coupe (4) présente une structure sous la forme de parties (16) en saillie radialement et de parties (14) en retrait radialement, où chaque partie (16) en saillie radialement, vue suivant la direction circonférentielle, passe, sur un côté situé dans un premier flanc (16a), dans la partie (14) en retrait radialement et respectivement adjacente et, sur le côté opposé situé dans un deuxième flanc (16b), passe dans l'autre partie (14) en retrait radialement et respectivement adjacente,
**caractérisée en ce que** l'angle de bord de coupe (X) sur le premier flanc (16a) est plus grand que celui sur le deuxième flanc (16b).

2. Molette de coupe (2) selon la revendication 1, **caractérisée en ce que** le premier flanc (16a) de chaque partie (16) en saillie radialement est configuré en étant plus plat que le deuxième flanc (16b) de cette partie, et l'angle de bord de coupe (X) sur le premier flanc (16a) est plus grand que l'angle de bord de coupe (X) sur le deuxième flanc (16b).

3. Molette de coupe selon la revendication 1 ou 2, **caractérisée en ce que** les parties en saillie radialement et les parties en retrait radialement forment un bord de coupe continu le long de la direction circonférentielle de la molette de coupe.

4. Molette de coupe selon l'une quelconque des revendications 1 à 3, **caractérisée en ce que** les parties (14) en retrait radialement présentent, en regardant dans le sens radial sur la molette de coupe (2), une forme en V, où les branches (22) des parties (14) en retrait radialement forment en particulier un angle obtus Z, de préférence à peu près égal à 145°.

5. Molette de coupe selon la revendication 2, **caractérisée en ce que** les flancs (16b) à forte pente présentent un angle de bord de coupe (X₂) réduit de 0° à 40° environ par rapport à l'angle de bord de coupe meulé (X, X₁), et les flancs plats (16a) présentent un angle de bord de coupe (X₃) augmenté de 0° à 40° environ par rapport à l'angle de bord de coupe meulé (X, X₁).

6. Molette de coupe selon l'une quelconque des revendications 1 à 5, **caractérisée en ce que** les parties (16) en saillie radialement présentent, suivant la direction circonférentielle, une extension allant de 5 µm à 50 µm environ.

7. Molette de coupe selon l'une quelconque des revendications 1 à 6, **caractérisée en ce que** les parties (14) en retrait radialement présentent une extension axiale de 200 µm environ, en particulier de façon symétrique par rapport au bord de coupe (4).

8. Molette de coupe selon l'une quelconque des revendications 1 à 7, **caractérisée en ce que** les parties (16) en saillie radialement et les parties (14) en retrait radialement présentent une différence de hauteur radiale allant de 3 µm à 15 µm environ.

9. Dispositif de coupe pour des matériaux fragiles, en particulier de la céramique et/ou du verre, qui présente une molette de coupe (2) selon l'une quelconque des revendications 1 à 8.

10. Procédé de fabrication d'une molette de coupe structurée, en particulier selon l'une quelconque des revendications 1 à 8, procédé qui présente les étapes qui suivent, consistant :
- à fournir une molette de coupe ayant un bord de coupe s'étendant le long de la circonférence, où le bord de coupe présente un angle de bord de coupe sensiblement uniforme ;
- à fournir un dispositif servant à produire un faisceau à haut pouvoir énergétique ;
- à façonner dans le bord de coupe, en utilisant le faisceau à haut pouvoir énergétique, une structure se présentant sous la forme de parties en saillie radialement et de parties en retrait radialement, où le faisceau à haut pouvoir énergétique est dirigé sur la molette de coupe, essentiellement de façon parallèle au plan de la ligne circonférentielle du bord de coupe, et où le faisceau à haut pouvoir énergétique est guidé transversalement au-dessus du bord de coupe, suivant une direction parallèle à l'axe de la molette de coupe,
**caractérisé en ce que** le faisceau à haut pouvoir énergétique est incident sur le bord de coupe, en formant un angle par rapport au rayon de la molette de coupe.

11. Procédé selon la revendication 10, **caractérisé en ce que** l'on utilise comme faisceau à haut pouvoir énergétique, un faisceau laser d'un laser à impulsions courtes, en particulier d'un laser picoseconde ou d'un laser femtoseconde.

12. Procédé selon la revendication 10, **caractérisé en ce que** le laser à impulsions courtes est actionné avec une longueur d'impulsions à peu près égale à 10 picosecondes et avec une fréquence d'impulsions à peu près égale à 500 kHz.

13. Procédé selon la revendication 11 ou 12, **caractérisé en ce que** le laser à impulsions courtes produit un faisceau laser ayant un diamètre de faisceau défini à 1/e² de 20 µm environ.

14. Procédé selon l'une quelconque des revendications 10 à 13, **caractérisé en ce que** la molette de coupe est tournée de façon incrémentielle au moyen d'un entraînement, où le faisceau à haut pouvoir énergétique, après un incrément de rotation, est guidé transversalement au-dessus du bord de coupe, pour le façonnage des parties en saillie radialement et des parties en retrait radialement.

15. Procédé selon l'une quelconque des revendications 9 à 14, **caractérisé en ce que** le faisceau à haut pouvoir énergétique est guidé à plusieurs reprises transversalement au-dessus du bord de coupe de la molette de coupe, pour le façonnage d'une partie en retrait radialement.

16. Procédé selon l'une quelconque des revendications 9 à 15, **caractérisé en ce que** l'intensité, le diamètre de faisceau et/ou la vitesse de déplacement transversal du faisceau à haut pouvoir énergétique sont modulés de façon diverse pendant les différents mouvements transversaux du bord de coupe, dans le but d'influencer le façonnage de la structure.

17. Procédé selon l'une quelconque des revendications 9 à 16, **caractérisé en ce que** l'angle formé entre le faisceau à haut pouvoir énergétique et le rayon de la molette de coupe est compris entre 125° et 145° environ.
